# EUROPÄISCHE PATENTSCHRIFT

(11) **EP 2 405 205 B1**
(45) Veröffentlichungstag und Bekanntmachung des Hinweises auf die Patenterteilung: **10.09.2014**
(21) Anmeldenummer: 10169008.9
(22) Anmeldetag: 09.07.2010
(51) Int. Cl.: F24D 19/08, F24D 11/00, F24D 3/00, F24D 17/00

(54) **Gasabscheider in einer Solaranlage zur Wärmegewinnung**
Gas separator in a solar installation for generating heat
Séparateur de gaz dans une installation solaire pour la production de chaleur

(43) Veröffentlichungstag der Anmeldung: 11.01.2012
(73) Patentinhaber: Roth, Hansjörg, 9650 Nesslau (CH); Van Winden, Thomas, 9652 Neu St. Johann (CH)
(72) Erfinder: Roth, Hansjörg, 9650 Nesslau (CH); Van Winden, Thomas, 9652 Neu St. Johann (CH)
(74) Vertreter: Künsch, Joachim

(56) Entgegenhaltungen:
- EP-A2- 0 653 596
- WO-A1-2005/059445
- DE-C1- 19 654 037
- FR-A1- 2 437 579
- JP-A- 60 133 263
- US-A- 4 050 445

## Beschreibung

Die Erfindung bezleht slch auf eine Solaranlage zur Wärmegewinnung, der im Oberbegriff des Anspruchs 1 genannten Art. Weiter betrifft die Erfindung ein Verfahren zum Betrieb einer Solaranlage mit einem derartigen Gasabscheider.

Überhitzung und Gaseinschlüsse, wie z. B. Lufteinschlüsse im Leitungssystem führen bei thermischen Solaranlagen zu Fehlfunktionen, welche den Betrieb der thermischen Solaranlage zur Wärmegewinnung stören. Solche Fehlfunktionen bedürfen häufig Servicearbeiten, die mit Kosten für den Installateur und/oder den Endkunden verbunden sind.

Ständig befüllte Solaranlagen, bei denen das Wärmeträgermedium, wie Wasser, ein Frostschutzmittelgemisch oder Glykol, während des ganzen Betriebs im Leitungssystem verbleiben, zeichnen sich durch eine hohe Effizienz und einen einfachen Aufbau der Solaranlage aus. Diese Solaranlagen haben jedoch den Nachteil, dass z. B. bei einem Stillstand der Umwälzpumpe, bspw. bei einem Stromausfall, eine Überhitzung des Wärmoträgermediums auftritt.

Bei entleerenden Systemen wird bei abgeschalteter Umwälzpumpe der Sonnenkollektor und ein Teil des Leitungssystems entleert und das überschüssige Wärmeträgermedium in einem Auffangbehälter aufgenommen. Zur erneuten Befüllung der entleerenden Solaranlage wird mittels der Umwälzpumpe das im Auffangbehälter Wärmeträgermedium wieder In das Leitungssystem gepumpt. Um den Befüllvorgang in nützlicher Frist zu gewährleisten, sind als Umwälzpumpen so genannte Verdrängerpumpen oder Pumpen anderer Bauart mit hoher Drehzahl erforderlich, welche einen hohen Stromverbrauch aufweisen und einen hohen Verschlelss aufweisen. Die Gebrauchstauglichkeit dieser Pumpen wird durch in dem Leitungssystem befindliche Gaselnschlüsse, wie z. B. Lufteinschlüsse, massgeblich reduziert. Durch die Anordnung eines Gasabscheiders im Leitungssystem, der im Leitungssystem befindliche Gaselnschlüsse beim Durchfliessen des Wärmeträgermediums aussondert bzw. ausarbeitet, kann zumindest dieser nachteilige Effekt für diese Art von Umwälzpumpen vermieden werden.

Aus der EP 1 692 435 B1 ist eine Solaranlage zur Wärmegewinnung bekannt. Die Solaranlage umfasst einen Sonnenkollektor, einen Wärmetauscher, einen Auffangbehälter einen Gasabscheider, ein diese Bautelle verbindendes Leitungssystem für ein Wärmeträgermedium, eine im Leitungssystem angeordnete Umwälzpumpe zur Zirkulation des Wärmeträgermediums im Leitungssystem. Das Leitungssystem umfasst eine den Sonnenkollektor mit dem Wärmetauscher verbindende Warmleitung und eine den Wärmetauscher mit dem Sonnenkollektor verbindende Kaltleitung sowie eine Bypassleitung, die unter Umgehung des Wärmetauschers die Warmleitung mit der Keltleltung verbindet. Der Auffangbehälter ist in der Bypassleitung vorgesehen. Ein Umschaltventil zum Umschalten des Wärmeträgermediumstromes ist im Leitungssystem vorgesehen. Der Gasabscheider ist in der Warmleitung des Leitungssystems, direkt benachbart zu dem Auffangbehälter vorgesehen, der seinerseits nahe beim höchsten Punkt des Leitungssystems und somit nahe dem Sonnenkollektor angeordnet ist.

Nachteilig an der bekannten Lösung ist, dass der Auffangbehälter und somit der Gasabscheider in den meisten Installationen in einen Bereich zu llegen kommt, der weit von den übrigen technischen Einrichtungen der Solaranlage entfernt ist. Da der Sonnenkollektor zumeist auf dem Dach eines Gebäudes vorgesehen ist, wird das mit dem Aufnahmebehälter verbundene Handling erschwert. Des Weiteren steht für die Entleerung des Systems nur eine geringe Höhendifferenz zur Verfügung, womit der Entleerungsprozess eine verhältnismässig lange Dauer aufweist, die trotz des Entieervorgangs zu einer Überhitzung des Wärmeträgermediums und somit zu Schäden bzw. Fehlfunktionen im Betrieb der Solaranlage führen kann. Des Weiteren muss aufgrund der parallelen Anordnung des Auffangbehälters ein minimaler Pegelstand in diesem für eine reibungslose Funktion der Solaranlage gemäss der EP 1 692 435 B1 gegeben sein. Ist dies nicht der Fall, ist die Zirkulation gestört oder unterbrochen. Zudem Ist die Erstbefüllung der Solaranlage mit dem Wärmeträgermedium durch die Anordnung des Auffangbehälters auf dem Dach sehr aufwändig und zeitintensiv.

Aufgabe der Erfindung ist, eine Solaranlage mit einem Gasabscheider zu schaffen, der insbesondere die vorgenannten Nachteile nicht aufweist und einen Dauerbetrieb der Solaranlage In allen Betrlebszuständen sicherstellt. Welter soll ein Verfahren zum effizlenten Betrieb einer Solaranlage mit einem Gasabscheider geschaffen werden.

Die Aufgabe Ist durch die Morkmale der unabhängigen Ansprüche gelöst. Vorteilhafte Weiterbildungen sind In den Figuren und in den abhängigen Patentansprüchen dargelegt.

Gemäss der Erfindung ist das Umschaltventil ein Dreiwegventil und ist beim Anschluss der Bypassleitung an der Warmleitung vorgesehen und der Gasabscheider ist in der Warmleitung oder der Kaltleitung In einem von der Bypassanschlüssen begrenzten, den Wärmetauscher beinhaltenden Bereich des Leitungssystems vorgesehen.

Durch die erfindungegemässe Anordnung wird eine Solaranlage geschaffen, die auf einem Entleersystem für eine Solaranlage mit thermischen Sonnenkollektoren beruht, die aber Im Normalbetrieb. d. h. bei der Zirkulation des Wärmeträgermediums, die gleichen Merkmale wie eine ständig befüllte Solaranlage aufweist. Da bei der Erfindung das System zum grössten Teil der Nutzung ständig befüllt bleibt, muss die Umwälzpumpe nur den Druckverlust der Leitungen und des Sonnenkollektors bewältigen, was zu einem wesentlich geringeren Stromverbrauch während dem Betrieb und somit zu sehr geringen Unterhaltskosten führt. Bei einem Stromausfall oder einem anderen Ereignis, das zu einer Überhitzung des Würmeträgermediums führen kann, wird der Sonnenkollektor automatisch nach dem Umschalten des Umschaltventils entieert.

Durch die Erfindung wird eine effiziente Solaranlage geschaffen, die wenige einzelne und einfach aufgebaute Bauteile aufweist. Dies ergibt eine hohe Energieeffizienz, welche aufgrund des geringen Strombedarfs eine kostengünstige Wärmegewinnung ermöglicht. Zudem weist eine derartige Solaranlage im Vergleich zu den bekannten Lösungen einen sehr geringen Wartungsbedarf auf.

Durch den Gasabscheider werden dabei kontinuierlich Gaseinschlüsse aus dem Leitungssystem ausgearbeitet, so dass das ganze System der Solaranlage und insbesondere die Umwälzpumpe geringeren Belastungen als bei herkömmlichen thermischen Solaranlagen ausgesetzt ist. Eine Entleerung der Kollektoren erfolgt nur bei Überhitzung des Wärmeträgermediums in denselben und wird durch Aufstieg von Gas aus dem Aufnahmebehälter oder -gefäss in einfacher Weise durchgeführt. Es erfolgen somit verhältnismässig wenige Befüllvorgänge während eines Jahres, was sich vorteilhaft auf die Betriebskosten und die Gebrauchstauglichkeit der Solaranlage auswirkt. Durch die Anordnung des Aufnahmebehälters im Bypass wird dieser im produzierenden Betrieb der Solaranlage nicht durchflossen. Dies hat den Vorteil, dass keine Wärmeverluste über den Auffangbehälter entstehen, was bei herkömmlichen Drain-Back-Systemen aber immer der Fall ist. Müssen die Kollektoren betriebsbedingt entleert werden, geschieht dies direkt in den Auffangbehälter. Das entleerende Wärmeträgermedium durchfliesst dabei nicht den Wärmetauscher und entzieht ihm dabei auch keine Energie mehr.

Das Umschaltventil ist vorteilhaft im Normalbetrieb dauernd bestromt, so dass z. B. bei einem Stromausfall automatisch dieses Umschaltventil zur Entleerung des Sonnenkollektors umgeschaltet wird.

Unter einem Solarkollektor wird in diesem Zusammenhang auch ein Feld aus mehreren, miteinander seriell oder parallel verbundenen Solarkollektoren verstanden.

Vorzugsweise ist der Gasabscheider in Bezug auf den Sonnenkollektor unterhalb des Auffangbehälters angeordnet, was eine einfache Ausarbeitung der im Leitungssystem befindlichen Gaseinschlüsse durch Aufstieg durch das in der entsprechenden Leitung befindliche Wärmeträgermedium ermöglicht.

Bevorzugt ist eine den Gasabscheider mit dem Auffangbehälter verbindende Entlüftungsleitung vorgesehen, so dass die ausgearbeiteten Gaseinschlüsse in den Auffangbehälter entlüftet werden und daher der Betriebsdruck der Solaranlage trotz den ausgearbeiteten Gaseinschlüssen bestehen bleibt. Dies sichert einen effizienten Betrieb einer entsprechend eingestellten Solaranlage.

Vorzugsweise mündet die Entlüftungsleitung in den gasgefüllten Bereich des Auffangbehälters, so dass die ausgearbeiteten Gaseinschlüsse nicht durch das im Auffangbehälter befindliche Wärmeträgermedium durchgeleitet werden müssen.

Weiter vorteilhaft ist ein Entlüftungsabsperrventil in der Entlüftungsleitung vorgesehen, welches ein Absperren der Entlüftungsleitung ermöglicht und somit einen ungewünschten Austausch zwischen dem Gasabscheider bzw. Leitungssystem und dem Auffangbehälter verhindert. Besonders vorteilhaft ist das Entlüftungsabsperrventil zusätzlich als Rückschlagventil ausgebildet, so dass in der offenen Stellung des Entlüftungsabsperrventils ein Durchfluss der Gaseinschlüsse in Richtung des Auffangbehälters möglich, aber ein Rückfluss der Gaseinschlüsse vom Auffangbehälter in den Gasabscheider verhindert ist. In einer weiteren Variante ist das Entlüftungsabsperrventil als Überströmventil ausgebildet, welches bis auf ein bestimmtes Druckniveau einen Rückfluss des Wärmeträgermediums in den Auffangbehälter verhindert, aber beim Überschreiten des bestimmten Druckniveaus einen Rückfluss des Wärmeträgermediums in den Auffangbehälter erlaubt.

Vorzugsweise ist der Gasabscheider in der Kaltleitung, im Bereich von dem Anschluss der Bypassleitung an der Kaltleitung und dem Wärmetauscher angeordnet, so dass im Normalbetrieb die üblicherweise nachfolgend angeordnete Umwälzpumpe nicht durch die Gaseinschlüsse wesentlichen Schaden nehmen kann.

Besonders bevorzugt ist der Gasabscheider direkt beim Anschluss der Bypassleitung an der Kaltleitung angeordnet, so dass der Verbindungsabschnitt der Bypassleitung zwischen dem Aufnahmebehälter und der Kaltleitung geleichzeitig als Entlüftungsleitung für den Gasabscheider dient.

In einer alternativen, erfindungsgemässen Ausführungsform ist der Gasabscheider in der Warmleitung, im Bereich von dem Anschluss der Bypassleitung an der Warmleitung und dem Wärmetauscher vorgesehen, so dass nicht nur die Umwälzpumpe sondern auch gleichzeitig der Wärmetauscher vor einer grossen Menge von Gaseinschlüssen beim Durchfluss des Wärmeträgermediums geschützt ist.

Vorzugsweise ist der Auffangbehälter druckbeaufschlagt, womit ein Druck auf das Wärmeträgermedium im Sonnenkollektor oder bei mehreren Sonnenkollektoren, im Sonnenkollektorfeld wirkt. Dadurch werden punktuelle Verdampfungen im Sonnenkollektor und insbesondere im Absorber des Sonnenkollektors verhindert. Der Vordruck im Auffangbehälter liegt vorteilhaft 0.1 bar bis 0.5 bar und besonders vorteilhaft 0.15 bar bis 0.3 bar höher als der aus der statischen Höhe resultierende Druck der entsprechenden Solaranlage.

Bevorzugt ist ein Rückschlagventil in dem Leitungssystem vorgesehen, das eine unerwünschte Wärmezirkulation bzw. einen Rückfluss des Wärmeträgermediums bei abgeschalteter Umwälzpumpe verhindert. Vorteilhaft ist das Rückschlagventil in der Kaltleitung zwischen dem Wärmetauscher und dem Anschluss der Bypassleitung an der Kaltleitung vorgesehen, so dass ein allfällig vorhandener zunehmender Druck im Leitungssystem über den Aufnahmebehälter abgebaut wird.

Vorzugsweise ist zumindest eine zusätzliche Befüllpumpe vorgesehen, die nur während dem Befüllprozess, z. B. nach dem Entleeren der Solaranlage in Betrieb genommen wird. Während dem Befüllprozess laufen vorteilhaft beide Pumpen, welche hinsichtlich deren Leistungsbedarfs auf die entsprechende Funktion optimierbar sind. Dies führt im Gesamten zu kleineren Dimensionen und somit einem geringeren Strombedarf der einzelnen Pumpe. Je nach Ausgestaltung und örtlichen Gegebenheiten der installierten Solaranlage können bedarfsweise auch mehrere zusätzliche, gleich oder unterschiedlich ausgebildete Befüllpumpen in der Solaranlage vorgesehen sein.

Vorzugsweise ist die zusätzliche Befüllpumpe in der Bypassleitung angeordnet, so dass diese Befüllpumpe im Zirkulationsbetrieb nicht permanent durchströmt wird. Besonders bevorzugt ist die zusätzliche Befüllpumpe in Bezug auf den Sonnenkollektor unterhalb des Auffangbehälters angeordnet, so dass die Befüllpumpe beim Befüllvorgang immer Wärmeträgermedium ansaugt. Dadurch wird das Befüllen der Solaranlage mit dem Wärmeträgermedium ohne Gaseinschlüsse vorgenommen.

Die zusätzliche Befüllpumpe wie auch die Umwälzpumpe sind vorteilhaft derart ausgestaltet, dass im ausgeschalteten Betrieb der entsprechenden Pumpe das Wärmeträgermedium durch dieses in Förderrichtung wie auch in Gegenförderrichtung der Pumpe strömen kann.

Bevorzugt umfasst die Bypassleitung eine Befüllleitung, welche unter Umgehung des Gasabscheiders den Auffangbehälter mit der Kaltleitung verbindet. Damit kann eine schnelle Befüllung der Solaranlage nach einem Entleerungsvorgang sichergestellt werden, wobei das anschliessend durch den Gasabscheider strömende Wärmeträgermedium von allfällig vorhandenen Gaseinschlüssen befreit wird.

Vorzugsweise ist die zusätzliche Befüllpumpe in der Befüllleitung vorgesehen, womit eine noch schnellere Befüllung der Solaranlage möglich ist.

Vorteilhaft ist ein Befüllabsperrventil in der Befüllleitung vorgesehen, so dass die Befüllung der Solaranlage bedarfsweise durch den Gasabscheider oder unter Umgehung desselben erfolgen kann.

Bevorzugt ist die Umwälzpumpe und/oder die Befüllpumpe eine Hocheffizienzpumpe, die bei grosser Leistung einen geringen Energiebedarf aufweist. Durch den erfindungsgemässen Aufbau der Solaranlage kann eine Hocheffizienzpumpe gemäss der heutigen Energieklasse A verwendet werden. Vorteilhaft sind bei einer Solaranlage mit mehreren Pumpen alle diese Pumpen als Hocheffizienzpumpen ausgebildet, um den gesamten Strombedarf der Solaranlage auf ein Minimum zu beschränken und damit eine hohe Energieeffizienz der Solaranlage sicherzustellen. Alternativ ist vorteilhaft zumindest die Umwälzpumpe, welche während der Produktion der Wärmegewinnung in Betrieb ist, eine Hocheffizienzpumpe, so dass die Solaranlage zumindest zum grössten Teil ihrer Betriebsdauer einen geringen Strombedarf aufweist.

Vorzugsweise ist ein Entlüftungsabsperrventil in der Entlüftungsleitung vorgesehen, über welches die Entlüftungsleitung bedarfsweise hydraulisch von dem Zirkulationskreislauf getrennt werden kann. Dadurch wird bspw. ein Rückfluss des Wärmeträgermediums in den Aufnahmebehälter auch bei einem hohen Druck im Leitungssystem während dem Zirkulationsbetrieb sicher verhindert. Vorteilhaft ist das Entlüftungsabsperrventil zwischen dem Auffangbehälter und dem Anschluss der Bypassleitung an der Kaltleitung vorgesehen. Alternativ ist das Entlüftungsabsperrventil ein Druckausgleichsventil oder ein Überströmventil.

Bevorzugt ist ein Expansionsgefäss vorgesehen, mittels dem zeitweise auftretende Volumenzunahmen des Wärmeträgermediums ausgeglichen werden können. Mit dem Expansionsgefäss lassen sich somit Schäden an dem Leitungssystem und den Bauteilen der Solaranlage zuverlässig und einfach verhindern. Das Expansionsgefäss ist vorzugsweise mit der Bypassleitung verbunden. Vorteilhaft ist das Expansionsgefäss zwischen dem Entlüftungsabsperrventil und dem Anschluss der Bypassleitung an der Kaltleitung mit der Bypassleitung verbunden.

Vorzugsweise ist ein Drucksicherheitsventil vorgesehen, das für das System schädliche Drücke bedarfsweise abbauen kann. Das Drucksicherheitsventil ist vorteilhaft ein Druckventil, das mechanisch und/oder elektronisch gesteuert ist. Das Drucksicherheitsventil ist vorzugsweise am Auffangbehälter vorgesehen, womit das Gasvolumen im Auffangbehälter einfach reduziert werden kann. Alternativ ist das Drucksicherheitsventil in der Bypassleitung und/oder an der Verbindungsleitung vom Gasabscheider zum Auffangbehälter vorgesehen. Weiter kann das Drucksicherheitsventil auch an anderen Bauteilen oder Abschnitten des Leitungssystems angeordnet sein, bei denen gegebenenfalls mit einem unerwünschten Druckanstieg z. B. aufgrund einer Volumenzunahme des Wärmeträgermediums gerechnet wird.

Bevorzugt ist der Anschluss der Bypassleitung an der Kaltleitung zwischen dem Wärmetauscher und der Umwälzpumpe vorgesehen, was eine einfache Befüllung der Solaranlage nach einem Entleerungsprozess und optimale Nutzung der Solaranlage ermöglicht.

Das erfindungsgemässe Verfahren zum Betrieb einer Solaranlage, die einen zuvor beschriebenen Gasabscheider aufweist, umfasst die nachfolgenden Merkmale. Im Zirkulationsbetreib und/oder im Ruhebetrieb der Solaranlage ist das Umschaltventil in einer ersten Stellung geschaltet ist, in welcher die Bypassleitung hydraulisch von der Warmleitung getrennt ist, wobei auftretende Volumenänderungen im Wärmeträgermedium durch Ausdehnen des Wärmeträgermediums in den Auffangbehälter ausgeglichen werden, so dass im Zirkulationsbetreib und/oder im Ruhebetrieb der Solaranlage die Solaranlage ständig befüllt bleibt. In dieser Stellung des Umschaltventils wird das Wärmeträgermedium einzig von der Umwälzpumpe durch die Warmleitung von dem Sonnenkollektor zum Wärmetauscher und von diesem durch die Kaltleitung wieder zum Sonnenkollektor befördert (Zirkulationsbetrieb). Ist die Umwälzpumpe nicht im Betrieb verbleibt das Wärmeträgermedium, in dieser Stellung des Umschaltventils, im vorher beschriebenen Kreislauf. Tritt nun eine Volumenzunahme des Wärmeträgermediums auf, kann sich dieses aufgrund der Leitungsverbindung von der Kaltleitung zum Auffangbehälter in diesen ausdehnen. Da das im Auffangbehälter befindliche Gas in dieser Stellung des Umschaltventils nicht durch die Warmleitung entweichen kann, steigt der Druck innerhalb des Auffangbehälters an. Dieser Druckanstieg im Auffangbehälter verhindert, dass der Solarkollektor im Ruhestand entleert. Wie bereits dargelegt wurde, ist vorteilhaft ein Drucksicherheitsventil im System vorgesehen, welches besonders vorteilhaft am Auffangbehälter vorgesehen ist, um bei einem den Auffangbehälter möglicherweise beschädigenden Druck diesen entlasten zu können.

Im Fall einer Überhitzung des Wärmeträgermediums wird das Umschaltventil in eine zweite Stellung umgeschaltet, in welcher der das Umschaltventil mit dem Wärmetauscher verbindende Leitungsabschnitt der Warmleitung hydraulisch vom anderen Leitungsabschnitt der Warmleitung getrennt ist, so dass im Auffangbehälter befindliches Gas durch die Bypassleitung und die Warmleitung in den Sonnenkollektor strömen kann, wobei der Sonnenkollektor vollständig entleert wird. Durch das in den Auffangbehälter eindringende Wärmeträgermedium wird das Ausströmen des vorteilhaft unter Druck stehenden Gases unterstützt.

Soll die Solaranlage nach dem Entleerungsvorgang des Sonnenkollektors wieder befüllt werden, wird die Umwälzpumpe und/oder, sofern vorhanden, die Befüllpumpe in Betrieb genommen, wobei Wärmeträgermedium wieder durch die Kaltleitung dem Sonnenkollektor zugeführt wird. Vorteilhaft bleibt dabei das Umschaltventil in der zweiten Stellung geschaltet, so dass zu Beginn des Befüllvorgangs das Wärmeträgermedium im Auffangbehälter entgast wird. Nach einer gewissen Zeit wird das Umschaltventil wieder in die erste Stellung umgeschaltet, so dass die Solaranlage wieder im Zirkulationsbetrieb betrieben wird.

Alternativ wird zu Beginn des Befüllvorgangs, nach einem Entleeren des Sonnenkollektors, direkt das Umschaltventil von der zweiten Stellung in die erste Stellung umgeschaltet und die Umwälzpumpe und/oder, sofern vorhanden, die Befüllpumpe in Betrieb genommen. Die im Wärmeträgermedium befindlichen Gaseinschlüsse werden dann kontinuierlich von dem Gasabscheider ausgearbeitet und vorteilhaft in den Auffangbehälter geleitet.

Die Bezugszeichenliste ist Bestandteil der Offenbarung.

Anhand von Figuren wird die Erfindung symbolisch und beispielhaft näher erläutert.

Die Figuren werden zusammenhängend und übergreifend beschrieben. Gleiche Bezugszeichen bedeuten gleiche Bauteile.

Es zeigen dabei
- Fig. 1: - ein erstes erfindungsgemässes Ausführungsbeispiel einer Solaranlage in schematischer Darstellung,
- Fig. 2: - ein zweites erfindungsgemässes Ausführungsbeispiel einer Solaranlage in schematischer Darstellung,
- Fig. 3: - ein drittes erfindungsgemässes Ausführungsbeispiel einer Solaranlage in schematischer Darstellung,
- Fig. 4: - ein viertes erfindungsgemässes Ausführungsbeispiel einer Solaranlage in schematischer Darstellung,
- Fig. 5: - ein Detail einer Variante des vierten Ausführungsbeispiels der Solaranlage in schematischer Darstellung.

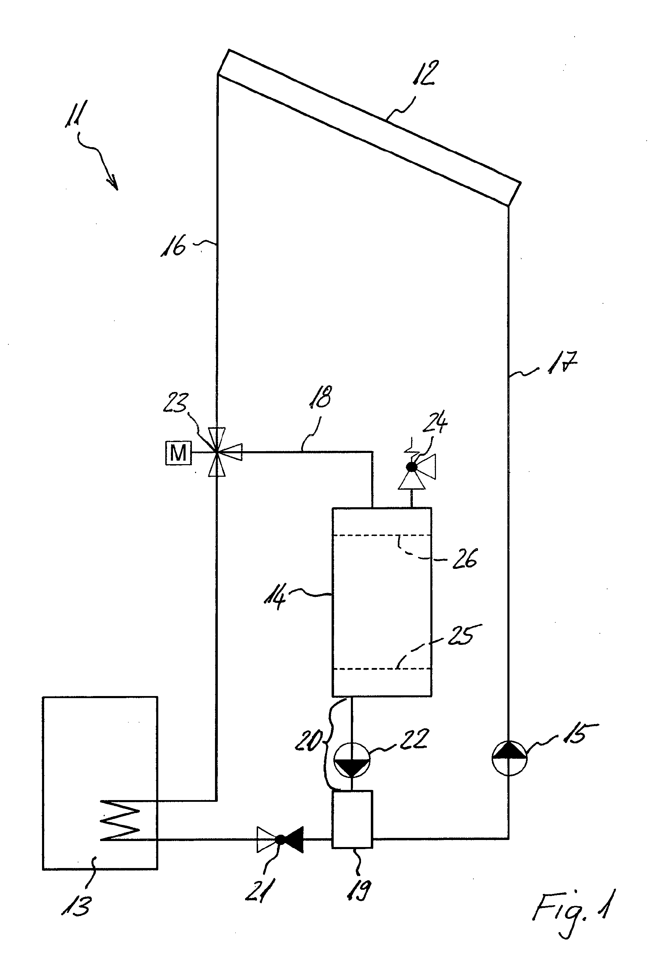

Die in der Figur 1 dargestellte Ausführungsform einer Solaranlage 11 zur Wärmegewinnung umfasst einen Sonnenkollektor 12, einen Wärmetauscher 13, einen Auffangbehälter 14, ein diese Bauteile verbindendes Leitungssystem für ein Wärmeträgermedium und eine im Leitungssystem angeordnete Umwälzpumpe 15 zur Zirkulation des Wärmeträgermediums im Leitungssystem. Das Leitungssystem umfasst eine den Sonnenkollektor 12 mit dem Wärmetauscher 13 verbindende Warmleitung 16 und eine den Wärmetauscher 13 mit dem Sonnenkollektor 12 verbindende Kaltleitung 17 sowie eine Bypassleitung 18, die unter Umgehung des Wärmetauschers 13 die Warmleitung 16 mit der Kaltleitung 17 verbindet.

Die Umwälzpumpe 15 ist in der Kaltleitung 17, dem Anschluss der Bypassleitung 18 an die Kaltleitung 17 nachgeschaltet angeordnet. Somit mündet die Bypassleitung 18 zwischen dem Wärmetauscher 13 und der Umwälzpumpe 15 in die Kaltleitung 17. Der Auffangbehälter 14 ist in der Bypassleitung 18 vorgesehen und druckbeaufschlagt. An dem Auffangbehälter 14 ist ein Drucksicherheitsventil 24 vorgesehen.

Ein elektronisch gesteuertes, im Normalbetrieb dauernd bestromtes Dreiwegventil ist als Umschaltventil 23 zum Umschalten des Wärmeträgermediumstromes im Leitungssystem beim Anschluss der Bypassleitung 18 an der Warmleitung 16 vorgesehen.

Ein Luftabscheider als Gasabscheider 19 ist bei diesem Ausführungsbeispiel in der Kaltleitung, direkt beim Anschluss der Bypassleitung 18 an der Kaltleitung 17 angeordnet. Der Gasabscheider 19 ist in Bezug auf den Sonnenkollektor 12 unterhalb des Auffangbehälters 14 angeordnet. Der den Auffangbehälter 14 mit der Kaltleitung 17 verbindende Leitungsabschnitt der Bypassleitung 18 bildet eine den Gasabscheider 19 mit dem Auffangbehälter 14 verbindende Entlüftungsleitung 20. In dieser Entlüftungsleitung 20 und somit in der Bypassleitung 18 ist weiter eine zusätzliche Befüllpumpe 22 vorgesehen, die in Bezug auf den Sonnenkollektor 12 ebenfalls unterhalb des Auffangbehälters 14 angeordnet ist. Die Umwälzpumpe 15 und die Befüllpumpe 22 sind jeweils Hocheffizienzpumpen. Alternativ ist nur die Umwälzpumpe 15 eine Hocheffizienzpumpe und die Befüllpumpe 22 ist eine Pumpe herkömmlicher Bauart, wie sie bei den bisher bekannten Solaranlagen zur Anwendung kommen.

Ein Rückschlagventil 21 ist in der Kaltleitung 17 des Leitungssystems, zwischen dem Wärmetauscher 13 und dem Anschluss der Bypassleitung 18 an der Kaltleitung 17 vorgesehen.

Im Normalbetrieb, dem so genannten Zirkulationsbetrieb, ist die Umwälzpumpe 15 in Betrieb und das Umschaltventil 23 derart geschaltet, dass die Warmleitung 16 den Sonnenkollektor 12 mit dem Wärmetauscher 13 verbindet. Das im Leitungssystem befindliche Wärmeträgermedium, z. B. ein Frostschutzmittelgemisch, zirkuliert somit vom Sonnenkollektor 12 zum Wärmetauscher 13 und von diesem durch die Kaltleitung 17 wieder zum Sonnenkollektor 12. Die im Sonnenkollektor 12 gewonnene Wärme wird im Wärmetauscher 13 einem Verbraucher, wie z. B. einem Warmwasserspeicher oder einem Heizsystem, zugeführt. Allfällige Gaseinschlüsse werden beim Durchströmen des Gasabscheiders 19 von diesem ausgearbeitet und durch die Entlüftungsleitung 20 in den Auffangbehälter 14 geleitet. Das Rückschlagventil 21 verhindert eine unerwünschte Schwerkraftzirkulation bei abgeschalteter Umwälzpumpe 15.

Tritt im Sonnenkollektor 12 eine Überhitzung des Wärmeträgermediums auf, beispielsweise weil die Umwälzpumpe 15 für längere Zeit abgestellt wird oder infolge Stromausfalls ausfällt, kann der entstehende Gasdruck im Leitungssystem aufgrund der Volumenzunahme des Wärmeträgermediums sich über die Kaltleitung 17 und der Entlüftungsleitung 20 in den Auffangbehälter 14 ausdehnen. Bei umgeschaltetem Umschaltventil 23 strömt dann Gas aus dem Auffangbehälter 14 durch den Leitungsabschnitt der Bypassleitung 18, der den Auffangbehälter 14 mit dem Umschaltventil 23 verbindet, sowie durch den - in Bezug auf die gezeigte Darstellung - oberen Teil der Warmleitung 16 in den Sonnenkollektor 12. Allfällig noch im Sonnenkollektor 12 befindliches Wärmeträgermedium wird von dem in der Warmleitung 16 aufsteigenden Gas durch die Kaltleitung 16 verdrängt, so dass der Sonnenkollektor 12 vollständig entleert wird.

Vorteilhaft ist das Umschaltventil 23 im Normalbetrieb bestromt, so dass bei einem Stromausfall automatisch das Umschaltventil 23 zum Entleeren des Sonnenkollektors 12 umgeschaltet wird. Das im Auffangbehälter befindliche Gas strömt dann durch den oberen Abschnitt der Bypassleitung 18 und den oberen Teil der Warmleitung 16 in den Sonnenkollektor 12, wobei der darin und in einem Teil der Kaltleitung 17 noch befindliche Anteil des Wärmeträgermediums durch die Entlüftungsleitung 20 in den Auffangbehälter 14 strömt. Der Auffangbehälter 14 ist dann bis zum oberen Level (siehe gestrichelte Linie 26) mit dem Wärmeträgermedium gefüllt.

Um das Leitungssystem der Solaranlage 11 wieder zu befüllen, wird hier die Befüllpumpe 22 und die Umwälzpumpe 15 gleichzeitig in Betrieb genommen sowie das Umstellventil 23 auf Bypassbetrieb gestellt, z. B. nicht bestromt ist. Die Leitungen und Kollektoren werden nun kontinuierlich gefüllt. Das System wird während dem Befüllprozess in den Auffangbehälter 14 entgast. Während dem Befüllen der Solaranlage 11 sinkt der Pegel des Wärmeträgermediums auf ein unteres Niveau ab (siehe gestrichelte Linie 25). Ist der gewünschte Füllgrad des Leitungssystems und des Sonnenkollektors 12 erreicht, wird die temporär zugeschaltete Befüllpumpe 22 abgestellt. Das Umschaltventil 23 schaltet den Bypass 18 ab und öffnet den Durchgang der Warmleitung 16 zum Wärmetauscher 13. Das Wärmeträgermedium zirkuliert nur noch mittels der Umwälzpumpe 15 im Leitungssystem. Im Wärmeträgermedium befindliche, restliche Gaseinschlüsse werden kontinuierlich durch den Gasabscheider 19 ausgearbeitet. Ein allfälliger Mangel an Wärmeträgermedium, der z. B. durch das Ausarbeiten der Gaseinschlüsse entsteht, wird durch automatisches Nachfliessen des Wärmeträgermediums aus dem Auffangbehälter 14 ausgeglichen.

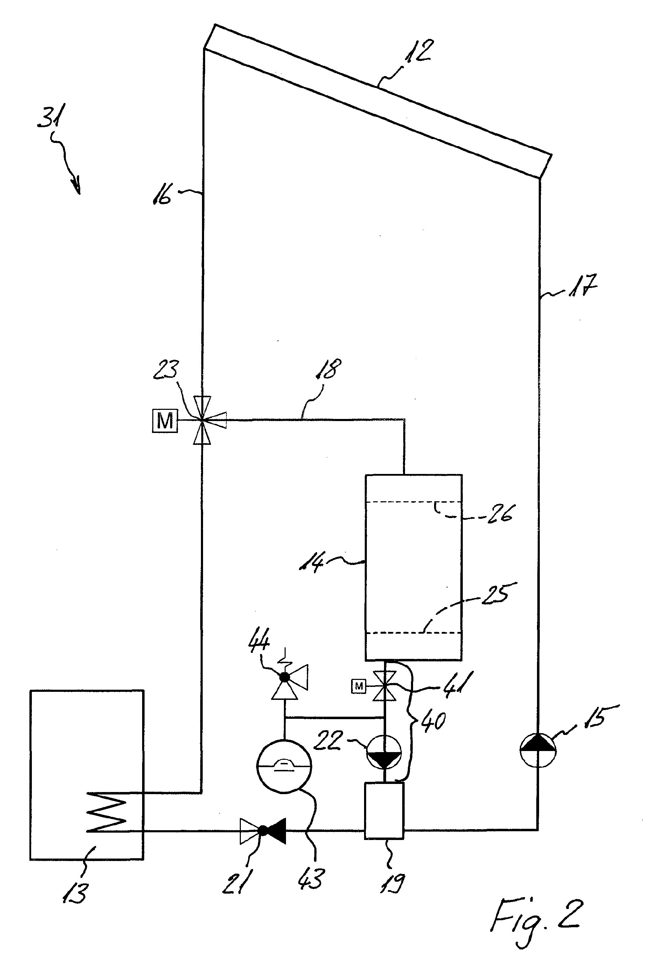

Der Aufbau der in der Figur 2 gezeigten Ausführungsform der Solaranlage 31 entspricht im Wesentlichen dem Aufbau der Solaranlage 11, gemäss der Figur 1. In der den Gasabscheider 19 mit dem Auffangbehälter 14 verbindenden Entlüftungsleitung 40, welche ein Teil der Bypassleitung 18 ist, ist zusätzlich ein Entlüftungsabsperrventil 41 vorgesehen. Mit diesem Entlüftungsabsperrventil 41 kann die Verbindung zwischen dem Gasabscheider 19 und dem Auffangbehälter 14 bedarfsweise geschlossen werden.

Weiter ist Expansionsgefäss 43 vorgesehen, das zwischen dem Entlüftungsabsperrventil 41 und dem Anschluss der Bypassleitung 18 an der Kaltleitung 17 mit der Bypassleitung 18 bzw. mit der Entlüftungsleitung 40 verbunden ist. Dieses System ist über ein Drucksicherheitsventil 44 gegen einen für die Solaranlage 31 schädlichen Druckaufbau gesichert.

Mittels des Entlüftungsabsperrventils 41 kann der Auffangbehälter 14 hydraulisch komplett vom Zirkulationskreislauf getrennt werden. Volumenänderungen des Wärmeträgermediums werden vollständig im Expansionsgefäss 43 aufgenommen.

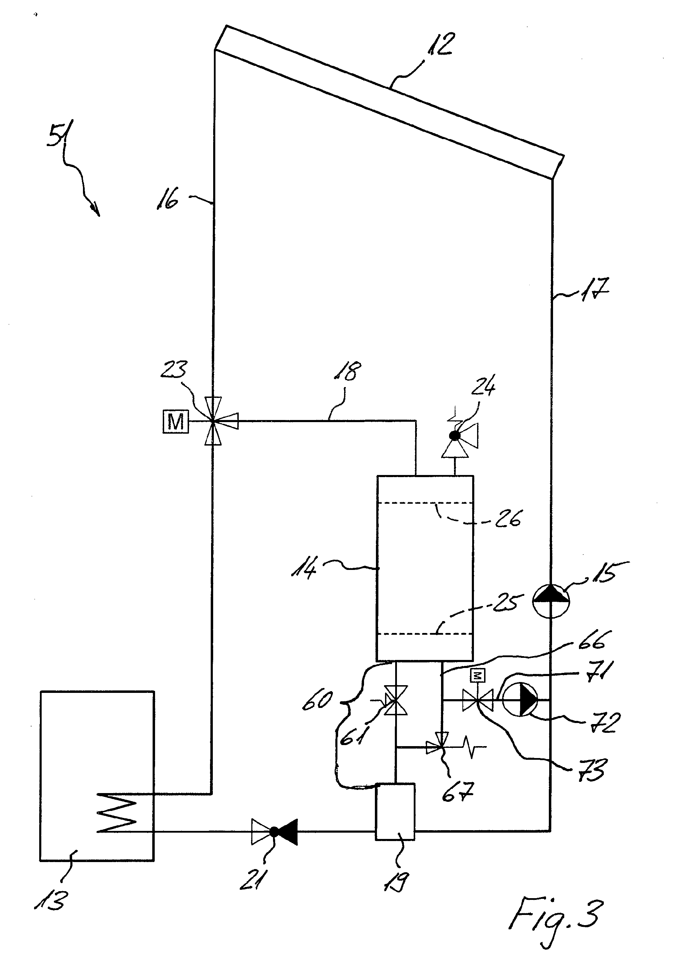

Bis auf die Leitungsführung der Bypassleitung 18 vom Auffangbehälter 14 zur Kaltleitung 17 entspricht die Solaranlage 51, wie sie in der Figur 3 gezeigt ist, im Aufbau im Wesentlichen wieder der Solaranlage 11. Der Gasabscheider 19 ist hier über ein Überströmventil mit dem Auffangbehälter 14 verbunden, wobei in dieser ein Entlüftungsabsperrventil 61 vorgesehen ist. Alternativ ist das Entlüftungsabsperrventil 61 ein Überströmventil, welches den Auffangbehälter 14 ebenfalls hydraulisch von dem Zirkulationskreislauf trennt, aber im Falle eines Überdrucks den Durchfluss des Wärmeträgermediums in den Auffangbehälter 14 erlaubt.

Weiter ist eine Parallelleitung 66 vorgesehen, die vom Auffangbehälter 14 ausgehend in die Entlüftungsleitung 60 zwischen dem Entlüftungsabsperrventil 61 und dem Gasabscheider 19 mündet. An der Parallelleitung 66 ist ein zweites Drucksicherheitsventil 67 vorgesehen. Das zweite Drucksicherheitsventil 67 ist vorteilhaft als Druckausgleichsventil ausgebildet, so dass bei einem allfälligen Unterdruck im System, z. B. aufgrund des Abkühlens des Wärmeträgermediums in der Nacht, der Systemdruck in der Solaranlage 31 durch Nachfliessen bzw. Zuführen von Wärmeträgermedium aus dem Auffangbehälter 14 in den Gasabscheider 19 ausgeglichen werden kann.

Des Weiteren umfasst die Bypassleitung 18 eine Befüllleitung 71, die unter Umgehung des Gasabscheiders 19 den Auffangbehälter 14 mit der Kaltleitung 17 verbindet. In der Befüllleitung 71 sind die zusätzliche Befüllpumpe 72 sowie ein Befüllabsperrventil 73 angeordnet. Das Befüllabsperrventil 73 ist zwischen dem Anschluss der Befüllleitung 71 an der Parallelleitung 66 und der Befüllpumpe 72 vorgesehen.

Mit dieser Anordnung der einzelnen Bauteile der Solaranlage 51 kann ein entleertes System noch schneller befüllt werden, wozu die verschiedenen Absperrventile 61 und 73 entsprechend geschaltet werden. Die Solaranlage 51 weist jedoch gegenüber den vorgenannten Ausführungen der Solaranlage 11 und 51 eine grössere Anzahl an Bauteilen auf, welche entsprechend zu steuern und zu warten sind.

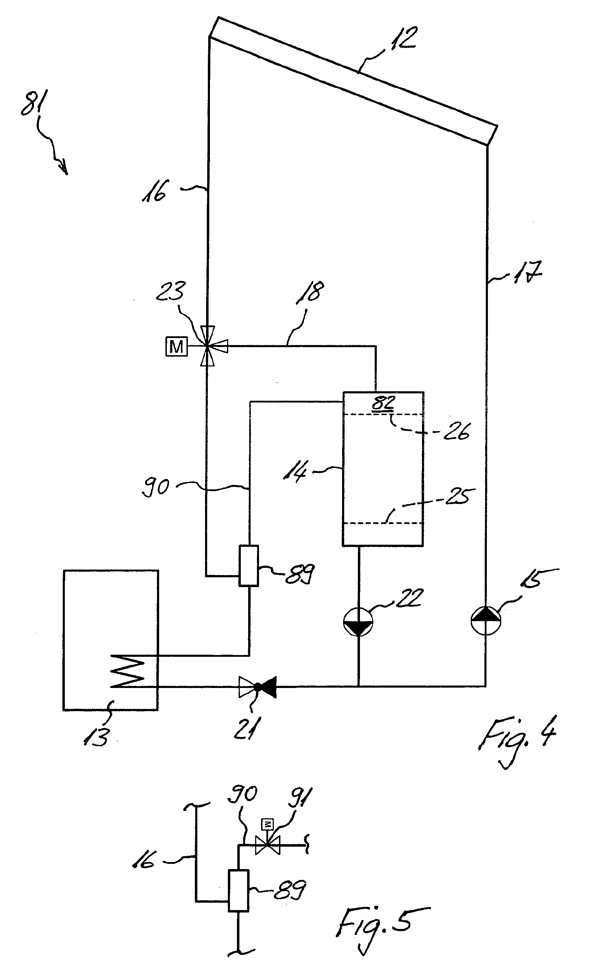

Bei der in der Figur 4 dargestellten Ausführung der Solaranlage 81 ist der Gasabscheider 89, anstelle in der Kaltleitung 17, in der Warmleitung 16 vorgesehen, im Bereich von dem Anschluss der Bypassleitung 18 an der Warmleitung 16 und dem Wärmetauscher 13. Der Gasabscheider 89 entlüftet über die Entlüftungsleitung 90 in den gasgefüllten, oberen Bereich 82 des Auffangbehälters 14. Alternativ entlüftet die Entlüftungsleitung 90, in einem hier nicht dargestellten Beispiel, unterhalb des unteren Pegels 25 in den Ausgleichsbehälter, wobei dann für einen einwandfreien Betrieb die Entlüftungsleitung 90 mit einem Anteil des Wärmeträgermediums befüllt sein sollte.

Gemäss dem in der Figur 5 gezeigten Detail kann in der Entlüftungsleitung 90 ein Entlüftungsabsperrventil 91 vorgesehen sein. In dieser Anordnung kann der Gasabscheider 89 auch auf derselben Höhe wie der Auffangbehälter 14 positioniert und gleichzeitig eine Ausarbeitung der Gaseinschlüsse im Leitungssystem gewährleistet werden.

Die einzelnen, im Zusammenhang mit den Figuren beschriebenen Details können selbstverständlich auch bei den anderen Ausführungsformen vorgesehen werden.

**Bezugszeichenliste**

| | | | |
|---|---|---|---|
| 11 | Solaranlage | 51 | Solaranlage |
| 12 | Sonnenkollektor | | |
| 13 | Wärmetauscher | 60 | Entlüftungsleitung |
| 14 | Auffangbehälter | 61 | Entlüftungsabsperrventil |
| 15 | Umwälzpumpe | | |
| 16 | Warmleitung | 66 | Parallelleitung |
| 17 | Kaltleitung | 67 | 2. Drucksicherheitsventil |
| 18 | Bypassleitung | | |
| 19 | Gasabscheider | 71 | Befüllleitung |
| 20 | Entlüftungsleitung | 72 | Befüllpumpe |
| 21 | Rückschlagventil | 73 | Befüllabsperrventil |
| 22 | Befüllpumpe | | |
| 23 | Umschaltventil | | |
| 24 | Drucksicherheitsventil | | |
| 25 | unterer Pegel | 81 | Solaranlage |
| 26 | oberer Pegel | 82 | gasgefüllter Bereich v. 14 |
| | | | |
| | | 89 | Gasabscheider |
| 31 | Solaranlage | 90 | Entlüftungsleitung |
| | | 91 | Entlüftungsabsperrventil |
| 40 | Entlüftungsleitung | | |
| 41 | Entlüftungsabsperrventil | | |
| | | | |
| 43 | Expansionsgefäss | | |
| 44 | Drucksicherheitsventil | | |

## Patentansprüche

1. Solaranlage (11; 31; 51; 81) zur Wärmegewinnung mit einem Sonnenkollektor (12), mit einem Wärmetauscher (13), mit einem Auffangbehälter (14), mit einem Gasabscheider (19; 89), mit einem diese Bauteile verbindenden Leitungssystem für ein Wärmeträgermedium, mit einer im Leitungssystem angeordneten Umwälzpumpe (15) zur Zirkulation des Wärmeträgermediums im Leitungssystem, wobei
das Leitungssystem eine den Sonnenkollektor (12) mit dem Wärmetauscher (13) verbindende Warmleitung (16) und eine den Wärmetauscher (13) mit dem Sonnenkollektor (12) verbindende Kaltleitung (17) sowie eine Bypassleitung (18) umfasst, die unter Umgehung des Wärmetauschers (13) die Warmleitung (16) mit der Kaltleitung (17) verbindet, wobei
der Auffangbehälter (14) in der Bypassleitung (18) und ein Umschaltventil (23) zum Umschalten des Wärmeträgermediumstromes im Leitungssystem vorgesehen sind, wobei der Gasabscheider (19; 89) in der Warmleitung (16) oder der Kaltleitung (17) in einem von den Bypassenschlüssen begrenzten, den Wärmetauscher (13) beinhaltenden Bereich des Leitungssystems vorgesehen ist, **dadurch gekennzeichnet, dass**
das Umschaltventil (23) ein Dreiwegventil ist und beim Anschluss der Bypassleltung (18) an derWarmieitung (16) vorgesehen ist, wobei im Zirkulationsbetrieb und/oder im Ruhebetrieb der Solaranlage das Umschaltventil (23) in einer ersten Stellung geschaltet ist, in welcher die Bypassleitung (18) hydraulisch von der Warmleitung (16) getrennt ist, und wobei im Fall einer Überhitzung des Wärmeträgermediums das Umschaltventil (23) in einer zweiten Stellung geschaltet ist, in welcher der das Umschaltventil (23) mit dem Wärmetauscher (13) verbindende Leitungsabschnitt der Warmleitung (16) hydraulisch vom anderen Leitungsabschnitt der Warmleitung (16) getrennt ist so dass, im Auffangbehälter (14) befindliches Gas durch die Bypassleitung (18) und die Warmleitung (16) in den Sonnenkollektor (12) strömen kann, wobei der Sonnenkollektor (12) vollständig entleert wird.

2. Solaranlage nach Anspruch 1, **dadurch gekennzeichnet, dass** der Gasabscheider (19; 89) in Bezug auf den Sonnenkollektor (12) unterhalb des Auffangbehälters (14) angeordnet ist.

3. Solaranlage nach Anspruch 1 oder 2, **dadurch gekennzeichnet, dass** eine den Gasabscheider (19; 89) mit dem Auffangbehälter (20) verbindende Entlüftungsleitung (20; 90) vorgesehen ist, die vorzugsweise in den gasgefüllten Bereich (82) des Auffangbehälters (14) mündet, wobei weiter vorteilhaft ein Entlüftungsabsperrventil (91) in der Entlüftungsleitung (90) vorgesehen ist.

4. Solaranlage nach einem der vorhergehenden Ansprüche, **dadurch gekennzeichnet, dass** der Gasabscheider (19) in der Kaltleitung (17), im Bereich von dem Anschluss der Bypassleitung (18) an der Kaltleitung (17) und dem Wärmetauscher (13) angeordnet ist, wobei der Gasabscheider (19) vorzugsweise direkt beim Anschluss der Bypassleitung (18) an der Kaltleitung (17) angeordnet ist.

5. Solaranlage nach einem der Ansprüche 1 bis 3, **dadurch gekennzeichnet, dass** der Gasabscheider (89) in der Warmleitung (16), im Bereich von dem Anschluss der Bypassleitung (18) an der Warmleitung (16) und dem Wärmetauscher (13) vorgesehen ist.

6. Solaranlage nach einem der vorhergehenden Ansprüche, **dadurch gekennzeichnet, dass** der Auffangbehälter (14) druckbeaufschlagt ist.

7. Solaranlage nach einem der vorhergehenden Ansprüche, **dadurch gekennzeichnet, dass** ein Rückschlagventil (21) in dem Leitungssystem vorgesehen ist, das vorzugsweise in der Kaltleitung (17) zwischen dem Wärmetauscher (13) und dem Anschluss der Bypassleitung (18) an der Kaltleitung (17) vorgesehen ist.

8. Solaranlage nach einem der vorhergehenden Ansprüche, **dadurch gekennzeichnet, dass** zumindest eine zusätzliche Befüllpumpe (22; 72) vorgesehen ist, die vorzugsweise in der Bypassleitung (18) angeordnet ist und besonders bevorzugt in Bezug auf den Sonnenkollektor (12) unterhalb des Auffangbehälters (14) angeordnet ist.

9. Solaranlage nach Anspruch 8, **dadurch gekennzeichnet, dass** die Bypassleitung (18) eine Befüllleitung (71) umfasst, welche unter Umgehung des Gasabscheiders (19) den Auffangbehälter (14) mit der Kaltleitung (17) verbindet und in welcher vorzugsweise die Befüllpumpe (72) vorgesehen ist.

10. Solaranlage nach einem der vorhergehenden Ansprüche, **dadurch gekennzeichnet, dass** die Umwälzpumpe (15) und/oder die Befüllpumpe (22; 72) eine Hocheffizienzpumpe ist.

11. Solaranlage nach einem der vorhergehenden Ansprüche, **dadurch gekennzeichnet, dass** ein Entlüftungsabsperrventit (41; 61) in der Entlüftungsleitung (20; 60) vorgesehen ist.

12. Solaranlage nach einem der vorhergehenden Ansprüche, **dadurch gekennzeichnet, dass** ein Expansionsgefäss (43) vorgesehen ist, das vorzugsweise mit der Bypassleitung (18) verbunden ist und vorteilhaft zwischen dem Entlüftungsabsperrventil (41) und dem Anschluss der Bypassleitung (18) an der Kaltleitung (17) mit der Bypassleitung (18) verbunden ist.

13. Solaranlage nach einem der vorhergehenden Ansprüche, **dadurch gekennzeichnet, dass** ein Drucksicherheitsventil (24; 44; 67) vorgesehen ist.

14. Solaranlage nach einem der vorhergehenden Ansprüche, **dadurch gekennzeichnet, dass** der Anschluss der Bypassleitung (18) an der Kaltleitung (17) zwischen dem Wärmetauscher (13) und der Umwälzpumpe (15) vorgesehen ist.

15. Verfahren zum Betrieb einer Solaranlage (11; 31; 51; 81) nach einem der vorhergehenden Ansprüche, **dadurch gekennzeichnet, dass** im Zirkulationsbetrieb und/oder im Ruhebetrieb der Solaranlage (11; 31; 51; 81) das Umschaltventil (23) in einer ersten Stellung geschaltet ist, in welcher die Bypassleitung (18) hydraulisch von der Warmleitung (16) getrennt ist, wobei auftretende Volumenänderungen im Wärmeträgermedium durch Ausdehnen des Wärmeträgermediums in den Auffangbehälter (14) ausgeglichen werden, so dass im Zirkulationsbetrieb und/oder im Ruhebetrieb der Solaranlage (11; 31; 51; 81) die Solaranlage (11; 31; 51; 81) ständig befüllt bleibt, und dass im Fall einer Überhitzung des Wärmeträgermediums das Umschaltventil (23) in eine zweite Stellung umgeschaltet wird, in welcher der das Umschaltventil (23) mit dem Wärmetauscher (13) verbindende Leitungsabschnitt der Warmleitung (16) hydraulisch vom anderen Leitungsabschnitt der Warmleitung (16) getrennt ist, so dass im Auffangbehälter (14) befindliches Gas durch die Bypassleitung (18) und die Warmleitung (16) in den Sonnenkollektor (12) strömen kann, wobei der Sonnenkollektor (12) vollständig entleert wird.

## Claims

1. A solar installation (11; 31, 51; 81) for producing heat, having a solar collector (12), having a heat exchanger (13), having a collection vessel (14), having a gas separator (19; 89), having a pipe system for a heat-transfer medium connecting these components, having a circulation pump (15) arranged in the pipe system for circulating the heat-transfer medium in the pipe system, wherein
the pipe system comprises a hot pipe (16) connecting the solar collector (12) to the heat exchanger (13) and a cold pipe (17) connecting the heat exchanger (13) to the solar collector (12) and also a bypass pipe (18), which connects the hot pipe (16) to the cold pipe (17) whilst bypassing the heat exchanger (13), wherein
the collection vessel (14) is provided in the bypass pipe (18) and a switch-over valve (23) for switching over the heat-transfer medium flow is provided in the pipe system, wherein
the gas separator (19; 89) is provided in the hot pipe (16) or the cold pipe (17) in a region of the pipe system delimited by the bypass connections and containing the heat exchanger (13),
**characterised in that**
the switch-over valve (23) is a three-way valve and is provided at connection of the bypass pipe (18) on the hot pipe (16), wherein
during circulating operation and/or during stand-by operation of the solar installation, the switch-over valve (23) is switched in a first position, in which the bypass pipe (18) is hydraulically separated from the hot pipe (16), and wherein
in the case of overheating of the heat-transfer medium, the switch-over valve (23) is switched in a second position, in which the pipe section of the hot pipe (16) connecting the switch-over valve (23) to the heat exchanger (13) is hydraulically separated from the other pipe section of the hot pipe (16), so that
gas located in the collection vessel (14) can flow through the bypass pipe (18) and the hot pipe (16) into the solar collector (12), wherein the solar collector (12) is emptied completely.

2. The solar installation according to Claim 1, **characterised in that** the gas separator (19; 89) is arranged below the collection vessel (14) in relation to the solar collector (12).

3. The solar installation according to Claim 1 or 2, **characterised in that** a bleeder pipe (20; 90) connecting the gas separator (19; 89) to the collection vessel (20) is provided, which bleeder pipe preferably opens into the gas-filled region (82) of the collection vessel (14), wherein a bleed shut-off valve (91) is further advantageously provided in the bleeder pipe (90).

4. The solar installation according to one of the preceding claims, **characterised in that** the gas separator (19) in the cold pipe (17) is arranged in the region of the connection of the bypass pipe (18) on the cold pipe (17) and the heat exchanger (13), wherein the gas separator (19) is preferably arranged directly at the connection of the bypass pipe (18) on the cold pipe (17).

5. The solar installation according to one of Claims 1 to 3, **characterised in that** the gas separator (89) is provided in the hot pipe (16) in the region of the connection of the bypass pipe (18) on the hot pipe (16) and the heat exchanger (13).

6. The solar installation according to one of the preceding claims, **characterised in that** the collection vessel (14) is pressurised.

7. The solar installation according to one of the preceding claims, **characterised in that** a non-return valve (21) is provided in the pipe system, which is preferably provided in the cold pipe (17) between the heat exchanger (13) and the connection of the bypass pipe (18) on the cold pipe (17).

8. The solar installation according to one of the preceding claims, **characterised in that** at least one additional filling pump (22; 72) is provided, which is preferably arranged in the bypass pipe (18) and is particularly preferably arranged below the collection vessel (14) in relation to the solar collector (12).

9. The solar installation according to Claim 8, **characterised in that** the bypass pipe (18) comprises a filling pipe (71), which connects the collection vessel (14) to the cold pipe (17), whilst bypassing the gas separator (19), and in which the filling pump (72) is preferably provided.

10. The solar installation according to one of the preceding claims, **characterised in that** the circulation pump (15) and/or the filling pump (22; 72) is a high-efficiency pump.

11. The solar installation according to one of the preceding claims, **characterised in that** a bleed shut-off valve (41; 61) is provided in the bleeder pipe (20; 60).

12. The solar installation according to one of the preceding claims, **characterised in that** an expansion vessel (43) is provided, which is preferably connected to the bypass pipe (18) and is advantageously connected to the bypass pipe (18) between the bleed shut-off valve (41) and the connection of the bypass pipe (18) on the cold pipe (17).

13. The solar installation according to one of the preceding claims, **characterised in that** a pressure safety valve (24; 44; 67) is provided.

14. The solar installation according to one of the preceding claims, **characterised in that** the connection of the bypass pipe (18) on the cold pipe (17) is provided between the heat exchanger (13) and the circulation pump (15).

15. A method for operating a solar installation (11; 31; 51; 81) according to one of the preceding claims, **characterised in that**
during circulating operation and during stand-by operation of the solar installation (11; 31; 51; 81), the switch-over valve (23) is switched in a first position, in which the bypass pipe (18) is hydraulically separated from the hot pipe (16), wherein volume changes occurring in the heat-transfer medium are compensated by expansion of the heat-transfer medium into the collection vessel (14), so that during circulating operation and during stand-by operation of the solar installation (11; 31; 51; 81), the solar installation (11; 31; 51; 81) remains constantly filled, and **in that**
in the case of overheating of the heat-transfer medium, the switch-over valve (23) is switched over to a second position, in which the pipe section of the hot pipe (16) connecting the switch-over valve (23) to the heat exchanger (13) is hydraulically separated from the other pipe section of the hot pipe (16), so that gas located in the collection vessel (14) can flow through the bypass pipe (18) and the hot pipe (16) into the solar collector (12), wherein the solar collector (12) is emptied completely.

## Revendications

1. Installation solaire (11 ; 31 ; 51 ; 81) pour produire de la chaleur avec un collecteur solaire (12), avec un échangeur thermique (13), avec un réceptacle de collecte (14), avec un séparateur de gaz (19 ; 89), avec un système de conduites reliant ces éléments pour un milieu caloporteur, avec une pompe de circulation (15) disposée dans le système de conduites pour la circulation du milieu caloporteur dans le système de conduites,
le système de conduites comprenant une conduite chaude (16) reliant le collecteur solaire (12) à l'échangeur thermique (13) et une conduite froide (17) reliant l'échangeur thermique (13) au collecteur solaire (12) ainsi qu'une conduite de dérivation (18), laquelle relie la conduite chaude (16) à la conduite froide (17) en contournant l'échangeur thermique (13),
le réceptacle de collecte (14) étant prévu dans la conduite de dérivation (18) et une soupape de commutation (23) pour commuter le flux de milieu caloporteur étant prévue dans le système de conduites,
le séparateur de gaz (19 ; 89) étant prévu dans la conduite chaude (16) ou la conduite froide (17) dans une zone du système de conduites délimitée par les raccords de dérivation, laquelle comprend l'échangeur thermique (13),
**caractérisé en ce que**
la soupape de commutation (23) étant une soupape à trois voies et est prévue au niveau du raccord de la conduite de dérivation (18) à la conduite chaude (16), moyennant quoi lors du fonctionnement de circulation et/ou du fonctionnement de repos de l'installation solaire, la soupape de commutation (23) est commutée dans une première position dans laquelle la conduite de dérivation (18) est séparée hydrauliquement de la conduite chaude (16), et moyennant quoi en cas d'un chauffage excessif du milieu caloporteur, la soupape de commutation (23) est commutée dans une deuxième position dans laquelle le segment de conduite de la conduite chaude (16) reliant la soupape de commutation (23) à l'échangeur thermique (13) est séparé hydrauliquement de l'autre segment de conduite de la conduite chaude (16), de sorte que du gaz se trouvant dans le réceptacle de collecte (14) puisse circuler à travers la conduite de dérivation (18) et la conduite chaude (16) jusque dans le collecteur solaire (12), moyennant quoi le collecteur solaire (12) est complètement vidé.

2. Installation solaire selon la revendication 1, **caractérisée en ce que** le séparateur de gaz (19 ; 89) est disposé en dessous du réceptacle de collecte (14) compte tenu du collecteur solaire (12).

3. Installation solaire selon la revendication 1 ou 2, **caractérisée en ce que** l'on prévoit une conduite de purge (20 ; 90) reliant le séparateur de gaz (19 ; 89) au réceptacle de collecte (20), laquelle débouche de préférence dans la zone (82) remplie de gaz du réceptacle de collecte (14), une soupape d'arrêt de purge (91) étant par ailleurs avantageusement prévue dans la conduite de purge (90).

4. Installation solaire selon l'une des revendications précédentes, **caractérisée en ce que** le séparateur de gaz (19) dans la conduite froide (17) est disposé dans la zone de raccord de la conduite de dérivation (18) à la conduite froide (17) et de l'échangeur thermique (13), le séparateur de gaz (19) étant de préférence disposé directement au niveau du raccord de la conduite de dérivation (18) à la conduite froide (17).

5. Installation solaire selon l'une des revendications 1 à 3, **caractérisée en ce que** le séparateur de gaz (89) dans la conduite chaude (16) est prévu dans la zone du raccord de la conduite de dérivation (18) à la conduite chaude (16) et de l'échangeur de chaleur (13).

6. Installation solaire selon l'une des revendications précédentes, **caractérisée en ce que** le réceptacle de collecte (14) est mis sous pression.

7. Installation solaire selon l'une des revendications précédentes, **caractérisé en ce que** l'on prévoit un clapet anti-retour (21) dans le système de conduites, lequel est de préférence prévu dans la conduite froide (17) entre l'échangeur thermique (13) et le raccord de la conduite de dérivation (18) à la conduite froide (17).

8. Installation solaire selon l'une des revendications précédentes, **caractérisée en ce que** l'on prévoit au moins une pompe de remplissage (22 ; 72) supplémentaire, laquelle est de préférence disposée dans la conduite de dérivation (18) et est de manière particulièrement préférée disposée au-dessous du réceptacle de collecte (14) compte tenu du collecteur solaire (12).

9. Installation solaire selon la revendication 8, **caractérisée en ce que** la conduite de dérivation (18) comprend une conduite de remplissage (71), laquelle relie le réceptacle de collecte (14) à la conduite froide (17) en contournant le séparateur de gaz (19) et dans laquelle on prévoit de préférence la pompe de remplissage (72).

10. Installation solaire selon l'une des revendications précédentes, **caractérisée en ce que** la pompe de circulation (15) et/ou la pompe de remplissage (22 ; 72) est une pompe à haut rendement.

11. Installation solaire selon l'une des revendications précédentes, **caractérisée en ce que** l'on prévoit une soupape d'arrêt de purge (41 ; 61) dans la conduite de purge (20 ; 60).

12. Installation solaire selon l'une des revendications précédentes, **caractérisée en ce que** l'on prévoit un vase d'expansion (43), lequel est des préférence relié à la conduite de dérivation (18) et est avantageusement relié à la conduite de dérivation (18) entre la soupape d'arrêt de purge (41) et le raccord de la conduite de dérivation (18) à la conduite froide (17).

13. Installation solaire selon l'une des revendications précédentes, **caractérisée en ce que** l'on prévoit une soupape de sécurité de pression (24 ; 44 ; 67).

14. Installation solaire selon l'une des revendications précédentes, **caractérisée en ce que** le raccord de la conduite de dérivation (18) à la conduite froide (17) est prévu entre l'échangeur de chaleur (13) et la pompe de circulation (15).

15. Procédé pour exploiter une installation solaire (11 ; 31 ; 51 ; 81) selon l'une des revendications précédentes, **caractérisé en ce que**, lors du fonctionnement de circulation et/ou du fonctionnement de repos de l'installation solaire (11 ; 31 ; 51 ; 81), la soupape de commutation (23) est commutée dans une première position dans laquelle la conduite de dérivation (18) est séparée hydrauliquement de la conduite chaude (16), moyennant quoi on compense des changement de volume apparaissant dans le milieu caloporteur par expansion du milieu caloporteur dans le réceptacle de collecte (14), de sorte qu'en fonctionnement de circulation et/ou en fonctionnement de repos de l'installation solaire (11 ; 31 ; 51 ; 81) (11 ; 31 ; 51 ; 81), l'installation solaire (11 ; 31 ; 51 ; 81) reste constamment remplie, et **en ce qu'**en cas d'un chauffage excessif du milieu caloporteur, la soupape de commutation (23) est commutée dans une deuxième position dans laquelle le segment de conduite de la conduite chaude (16) reliant la soupape de commutation (23) à l'échangeur thermique (13) est séparé hydrauliquement de l'autre segment de conduite de la conduite chaude (16), de sorte que du gaz se trouvant dans le réceptacle de collecte (14) puisse circuler à travers la conduite de dérivation (18) et la conduite chaude (16) jusque dans le collecteur solaire (12), moyennant quoi le collecteur solaire (12) est complètement vidé.
